**Europäisches Patentamt**

(19) **European Patent Office**

**Office européen des brevets**

(11) Veröffentlichungsnummer : **0 091 140**
**B1**

(12) **EUROPÄISCHE PATENTSCHRIFT**

(45) Veröffentlichungstag der Patentschrift :
07.06.89

(51) Int. Cl.⁴ : **G 01 F   1/05**

(21) Anmeldenummer : **83200315.6**

(22) Anmeldetag : **04.03.83**

(54) Durchflussmesser für einen Fluidstrom, Volumenstrom oder Wärmestrom.

| | |
|---|---|
| (30) Priorität : 08.03.82 NL 8200950<br>21.06.82 DE 8217706 U | (73) Patentinhaber : **Meterfabriek Schlumberger B.V.**<br>**Kamerlingh Onnesweg 63**<br>**NL-3316 GK Dordrecht (NL)** |
| (43) Veröffentlichungstag der Anmeldung :<br>12.10.83 Patentblatt 83/41 | (72) Erfinder : **Boes, Izaak Cornelis**<br>**Kolfstraat 26**<br>**NL-3311 XL Dordrecht (NL)** |
| (45) Bekanntmachung des Hinweises auf die Patenterteilung : 07.06.89 Patentblatt 89/23 | (74) Vertreter : **Hoorweg, Petrus Nicolaas et al**<br>**OCTROOIBUREAU ARNOLD & SIEDSMA Sweelinckplein 1**<br>**NL-2517 GK The Hague (NL)** |
| (84) Benannte Vertragsstaaten :<br>**AT BE CH DE FR GB IT LI LU NL SE** | |
| (56) Entgegenhaltungen :<br>AU--A--   510 874<br>DE--A-- 2 254 481<br>DE--A-- 2 254 482<br>DE--A-- 2 318 715<br>DE--A-- 2 319 829<br>DE--A-- 2 633 803<br>DE--A-- 2 647 297<br>DE--A-- 2 910 387<br>DE--A-- 3 018 788 | |

EP 0 091 140 B1

## Beschreibung

Die Erfindung betrifft eine Vorrichtung zur Verbrauchsvolumenmessung eines Fluidstroms z. B. eines Gas- oder Wasserstroms, welche Vorrichtung im wesentlichen aus einem Gehäuse mit einer Einlass- und einer Auslassöffnung besteht, einer im Gehäuse untergebrachten, die Ein- und Auslassöffnung trennenden Wand, und einer von dieser Wand getragenen, geschlossenen Umlaufkammer, die versehen ist mit einer Aussenwandung und mindestens einer Zufuhröffnung und einer Abflussöffnung, wobei in der Kammer ein Körper bewegbar untergebracht ist, und wobei die Vorrichtung ferner einen vom Körper getriebener Zähler besitzt.

Solche Vorrichtungen, bekannt aus DE-A-2 647 297, werden häufig zur Verbrauchsvolumenmessung als Heiß-Kaltwassermesser bzw. Wärmemesser zum Feststellen des Wärmeverbrauchs z. B. insbesondere in Stadtheizungssystemen benutzt. Solche Messinstrumente werden gewöhnlich durch Balgengasmesser, Turbinenradmesser für Wasser und Gase gebildet, wobei ein Schaufelrad oder eine Turbine verwendet wird. Solche Messer haben alle mechanische Mittel zum Überwachen des Fluidstroms, welche mechanischen Mittel sehr sorgfältig gelagert werden müssen, um eine gute Anlaufgenauigkeit des Messers zu gewährleisten. Diese sorgfältige Lagerung macht die Geräte jedoch z. B. im Falle aggressiver Flüssigkeiten ungeeignet, die z. B. im Zentralheizungskreislauf im Form durch Eisenteilchen und dgl. verschmutzten Wassers auftreten. Außerdem haben die Temperaturschwankungen einen nachteiligen Einfluß auf die Lebensdauer der Lager.

In einem Umlaufkanal umlaufende Kugeln sind bei Durchflußmessern z. B. aus DE-A-2 319 829, — 2 633 803 oder — 2 910 387 bekannt.

Die Erfindung bezweckt, eine Vorrichtung eingangs erwähnter Art zu schaffen, bei der die vorerwähnten Nachteile nicht auftreten und die zudem eine hohe Anlaufgenauigkeit aufweist.

Diese Aufgabe wird erfindungsgemäß durch die Merkmale des Anspruchs 1 gelöst.

Im Umlaufkanal wird der Fluidstrom die frei bewegbare Kugel im Kreislauf mit sich führen. Beim Passieren des Umpulsgebers wird jeweils ein Impuls abgegeben, der einem ausserhalb des Rahmens der Erfindung liegenden, elektrischen oder elektronischen oder sonstigen Impulsverarbeitungssystem zugeführt wird, wobei die Anzahl von Impulsen pro Zeiteinheit für das Volumen des Stroms durch den Kanal bzw. die Vorrichtung massgebend ist. Mittels dieser Daten kann unter Berücksichtigung der Gehäuseabmessungen der betreffende Volumenstrom festgestellt werden. Es wird einleuchten, dass durch das Fehlen irgendwelcher mechanischen Lagerung im Kanal die Vorrichtung für Schmutz im Fluidstrom, z. B. Kalkablagerungen und dgl., unempfindlich ist. In der Praxis hat sich ergeben, dass zum Erzielen der Messgenauigkeit die Masstoleranz des bewegbaren Körpers nicht gering zu sein braucht.

Zur Verringerung etwaiger Reibung der Kugel an der Innenwand des Leitungskanals ist die Kugel hohl ausgebildet und kann mit einem Medium gefüllt sein, dessen spezifisches Gewicht von dem des Fluids abweicht. Dabei wird wenigstens das Eigengewicht der Kugel durch den Auftrieb des Fluids ausgeglichen, sodass Reibung infolge des Eigengewichts vermieden wird.

Um einen dauernden Vorschub der Kugel im Kanal zu bewerkstelligen, sind die Zufuhröffnungen vorzugsweise tangentiell gerichtet in der Aussenwand des Kanals vorgesehen.

Um Stauungsunterschiede infolge niedriger bzw. hoher Strömungsgeschwindigkeiten zu korrigieren, kann ein Teil die ganze Zufuhröffnung in der Kanalwand örtlich verengt sein. Infolge dieser Verengung kann der Stromvektor aus der Zufuhröffnung im Kanal seine Richtung ändern, wodurch der Vorschubdruck auf den Körper sich entsprechend ändert.

Der Kanal ist vorzugsweise kreisförmig, wobei die Trennwandung einen Teil eines den Kanal umgebenden Schneckengehäuses bilden kann. Dadurch wird eine gleichmässige Zufuhr des Fluidstroms in den Leitungskanal sichergestellt.

Zum Erzielen einer linearen Beziehung zwischen der Umlaufgeschwindigkeit des kugelförmigen Körpers und der Fluidförderung können die Abführöffnungen auf verschiedenen Teilkreisens in der Wand des Umlaufkanals vorgesehen werden.

Die Erfindung wird an Hand der nachfolgenden Beschreibung einer Anzahl von Ausführungsformen näher erläutert. In der Zeichnung zeigen

Fig. 1 eine Draufsicht auf eine erste Ausführungsform der erfindungsgemässen Vorrichtung,

Fig. 2 einen Schnitt längs der Linie II-II in Fig. 1,

Fig. 3 einen Längsschnitt durch den Ein- und Ablasstumpf der Vorrichtung nach Fig. 1,

Fig. 4 einen Querschnitt längs der Linie IV-IV in Fig. 3,

die Fig. 5 und 6 Schnitte durch eine zweite Ausführungsform längs der Linie V-V bzw. VI-VI,

die Fig. 7 und 8 Schnitte durch eine dritte Ausführungsform längs der Linie VII-VII bzw. VIII-VIII.

Fig. 9 einen Teil des Schnitts der Fig. 7,

die Fig. 10 und 11 Schnitte durch eine vierte Ausführungsform längs der Linie X-X in Fig. 11 bzw. XI-XI in Fig. 10,

die Fig. 12 und 13, je einen Querschnitt durch eine fünfte Ausführungsform der Vorrichtung.

Die Vorrichtung nach den Figuren besteht im wesentlichen aus einem Gehäuse 1 mit dem Einlassstutzen 2 bzw. Auslassstutzen 33, die jede beliebige Gestalt haben können.

Im Gehäuse ist ein Umlaufkanal 4 untergebracht, der in den dargestellten Ausführungsformen kreisförmig ist. Der Umlaufkanal 4 hat Zufuhröffnungen 5 und Abflussöffnungen 6 in seiner Aussenwand.

Die Zufuhröffnungen 5 sind tangentiell gerichtet. Zwischen den Zu- und Abflußöffnungen bzw. dem Einlass- und Auslassstutzen des Gehäuses ist eine Trennwand 7 angebracht, so dass das durch den Einlassstutzen 2 eintretende Fluid stets durch den Kanal 4 dem Auslassstutzen 3 zufliessen wird.

Im Umlaufkanal 4 ist ein kugelförmiger, frei bewegbarer Körper 8 untergebracht. In Abhängigkeit der Stelle und der Ausbildung der Zufuhröffnungen 5 wird die Kugel 8 im Kanal herumlaufen, was unter anderem durch die tangentielle Richtung der Zufuhröffnungen 5 gefördert wird, wodurch eine kräftige Verwirbelung im Kanal 4 erreicht wird.

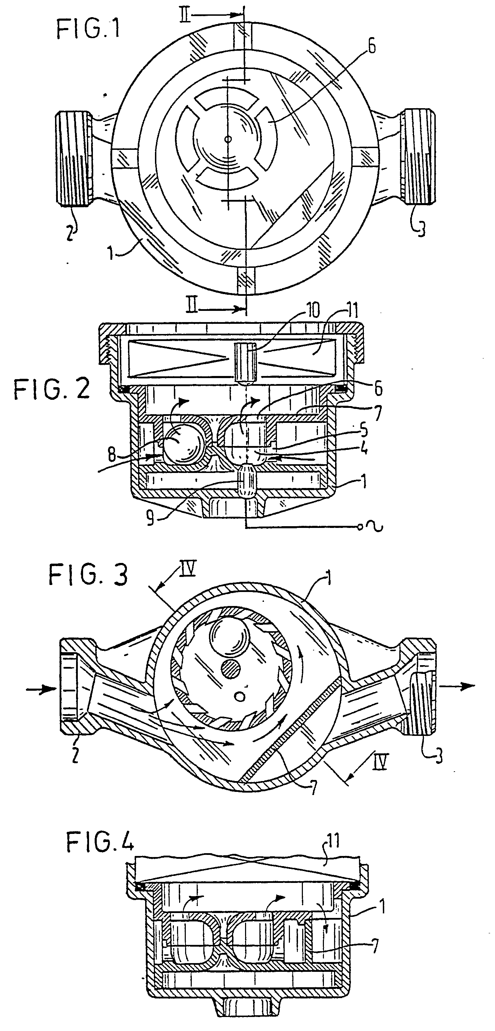

Nahe dem Kanal ist ein auf den Umlauf der Kugel 8 ansprechendes Organ angebracht, das in Fig. 2 in Form einer Lichtquelle 9 dargestellt ist, die auf eine lichtempfindliche Zelle 10 einer elektrischen Verarbeitungseinheit 11 gerichtet ist, die im oberen Teil des Gehäuses 1 untergebracht ist. Diese Verarbeitungseinheit 11 kann ausserdem mit Digital- oder Analogauslesemitteln versehen sein. Ausserdem kann die Verarbeitungseinheit 11 an einer ganz anderen Stelle als im Gehäuse angeordnet werden.

Die Wirkungsweise der Vorrichtung nach den Fig. 1 bis 4 ist folgende : das Fluid gelangt durch den Einlassstutzen 2 in den Raum um den Kanal 4 auf einer Seite der Trennwand 7, tritt durch die Zufuhröffnungen 5 in den Kanal ein und schiebt dabei die Kugel 8 in einer kreisförmigen Bahn vor sich her. Darauf fliesst das Fluid durch die Abflussöffnungen 6 nach der anderen Seite der Trennwand 7 und ferner zum Auslassstutzen 3. Wenn die Kugel 8 den Strahl der Lichtquelle 9 unterbricht, empfängt das lichtempfindliche Organ 10 jeweils einen Impuls, der in der Einheit 11 verarbeitet wird.

Bei höheren Strömungsgeschwindigkeiten wird die Umlaufgeschwindigkeit der Kugel 8 und somit auch die Anzahl von Impulsen pro Zeiteinheit am lichtempfindlichen Organ 10 zunehmen. Diese Anzahl von Impulsen ist ein Mass der zu messenden Strömungsgeschwindigkeit oder Fluidfördermenge.

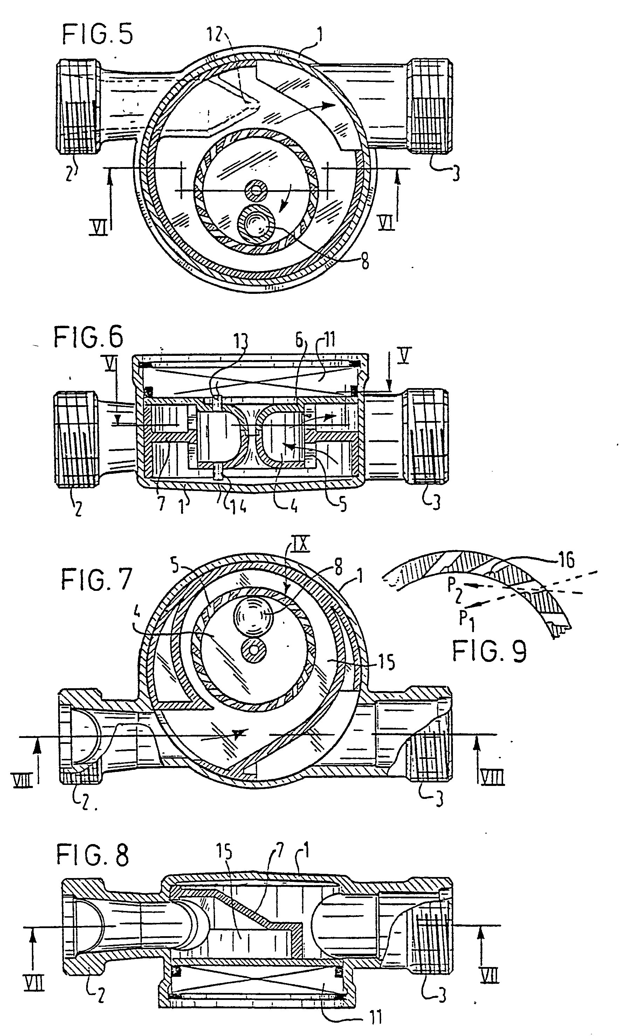

Die Vorrichtung nach den Fig. 5 und 6 unterscheidet sich von der nach den Fig. 1 bis 4 dadurch, dass die Trennwand 7 in halber Höhe des Kanals 4 angebracht ist, wobei die Zufuhröffnung 5 bzw. die Abfuhröffnung 6 des Kanals in dessen Aussenwand vorgesehen sind. In dieser Ausbildung kann auch die Abfuhröffnung 6 tangentiell gerichtet sein. Die Kugel 8 ist in diesem Falle hohl und kann mit einem bestimmten Medium gefüllt sein in der Weise, dass die Kugel im Fluid schwebt.

Der Impulsgeber in dieser Ausbildung kann aus zwei einander gegenüberliegend angebrachten Elektroden 13 und 14 bestehen, die auf eine Änderung der Leitfähigkeit im zwischenliegenden Gebiet ansprechen. Sobald die Kugel 8 passiert, tritt eine solche Änderung auf, worauf ein Impuls der elektronischen Verarbeitungsschaltung zugeführt wird.

Nach den Fig. 7 und 8 ist der kreisförmige Kanal in einem Schneckengehäuse 15 untergebracht, von dem die Trennwand 7 einen Teil bildet. Da der Abstand zwischen der Innenwand des Schneckengehäuses und der Aussenwand des kreisförmigen Kanals 4 kleiner wird, ist eine gleichmässige Zufuhr des Fluids durch die Zufuhröffnung 5 gewährleistet, wodurch ein gleichmässiger Vorschub des kugelförmigen Körpers 8 sichergestellt ist.

Die Zufuhröffnungen 5 können eine eine Verengung bildende Schwelle 16 haben (siehe Fig. 9), wodurch der Stromvektor bei zunehmender Geschwindigkeit von der mit P1 bezeichneten Stellung in eine Stellung P2 übergeht. Dadurch kann eine erwünschte Korrektur der Umlaufgeschwindigkeit der Kugel 8 erzielt werden, wodurch z. B. eine lineare Beziehung zwischen der Fluidgeschwindigkeit und der Umlaufgeschwindigkeit der Kugel 8 zustandegebracht werden kann.

Die Wirkungsweise der Ausführungsformen nach den Fig. 5 bis 9 entspricht der der Ausführungsformen nach den Fig. 1 bis 4.

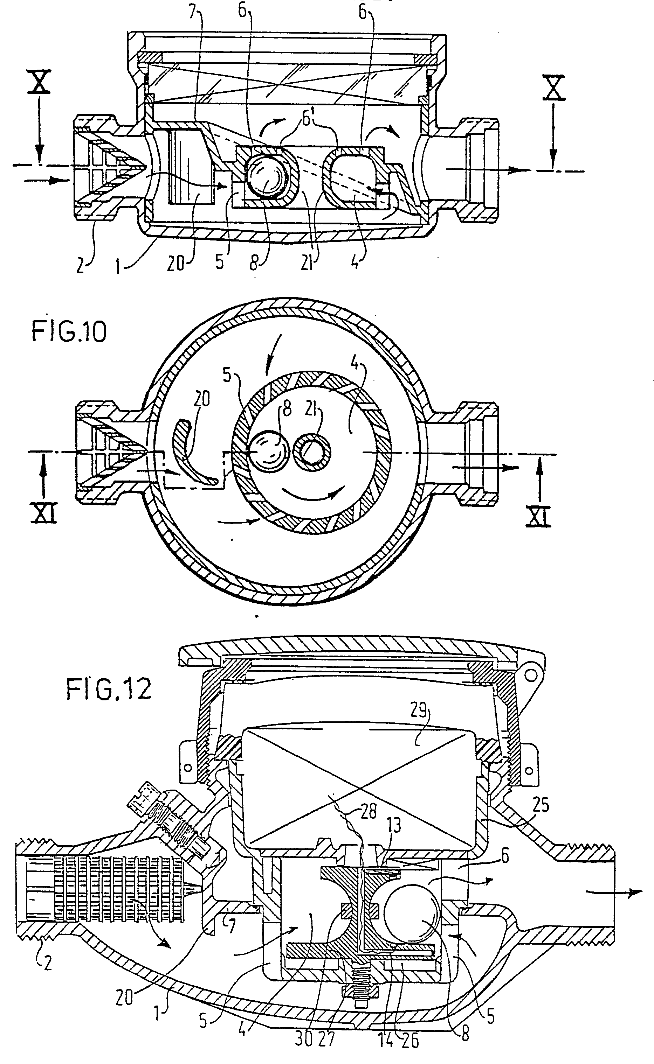

Die Fig. 10 und 11 zeigen eine Ausführungsform, in der die Einlassöffnung 2 einen den Fluidstrom ablenkenden Körper in Form einer Wandung flügelartigen Querschnitts 20 besitzt. Die Einlassöffnung sowie die Auslassöffnung sind dabei radial gerichtet. Die Wandung kann sich über die ganze Höhe des Gehäuses 1 erstrecken, aber in der Figur ist sie über nur einen Teil dargestellt. Die Abflussöffnungen 6 sind mit näher der Mitte des Kanals vorgesehenen, zusätzlichen Öffnungen 6' ergänzt. Bei niedrigen Strömungsgeschwindigkeiten begünstigt dies den Impuls der Kugel, da der Stromvektor sich im Querschnitt mehr diametral durch den Kanal erstreckt. Die Wandung 20 und die Ordnung der Einlassöffnungen 5 und der Abflussöffnungen 6, 6' tragen zum Erzielen einer linearen Beziehung zwischen der Geschwindigkeit der Kugel und der Fluidfördermenge bei.

Aus der Zeichnung geht hervor, dass die Zu- und Abfuhröffnungen durch eine sich im Gehäuse 1 diagonal erstreckende Wand 7 getrennt sind, von der die Kanalwand einen Teil bildet. In dieser Weise wird sichergestellt, dass der kugelförmige Körper bei allen Strömungsgeschwindigkeiten längs einer Seite 21 des Innenumfangs des Kanals 4 abrollt, was die Reproduzierbarkeit der Messungen begünstigt und Verschleiss verringert.

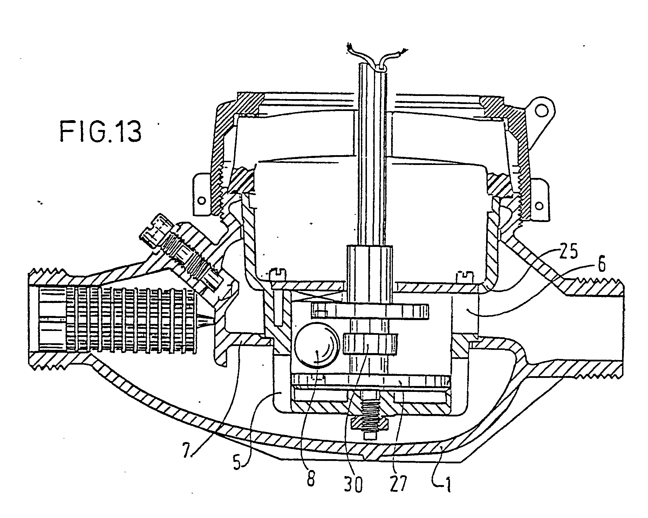

Fig. 12 und 13 zeigt je einen fünften bzw. sechsten Ausführungsform. Alle gleiche Teile sind mit die selben Bezugszeichen angegeben wie vorher. In dieser Vorrichtung wird ein übliches Gehäuse eines an sich bekannten Wassermessers verwendet. Dieser Messer, zum Beispiel Turbinenmesser, wird abgeändert durch Anordnung eines Einsatzkörpers 25, zum Beispiel eines einstückigen Kunststoffteils, in einem Loch der Trennwand 7 des Gehäuses 1. In dessen untere Teil ist ein Raum 26 ausgespart, zur Aufnahme eines höhenverstellbaren, im Querschnitt U-förmigen Glieds 27. Das Glied 27 bildet zusammen mit der Innenwandung des Raums 26 den kreisförmigen Laufkanal für die Kugel 8. Die Wandung des Raums 26 ist versehen mit über deren Umlauf verteilten Zuführöffnungen 5 bzw. Abflussöffnungen 6. Die Öffnungen können auf jede beliebige Weise geformt sein, wie oben erläutert in den Figuren 1-11. Das Glied 27 ist hier ebenfalls mit Elektroden 13 und 14 des Impulsgebers versehen. Die elektrischen Leitungen 28 können zu einem Zählgerät 29 im oberen Teil des Einsatzkörpers führen, jedoch ebenfalls nach einem aussen am Gehäuse 1 montierten Gerät, sehe Fig. 13. Zur Verringerung der Laufreibung der Kugel 8 ist ein Laufring 30 im Umlaufkanal angeordnet. Mit Hilfe des Einsatzkörpers 25 und dem darin angeordneten Glied 27 kann jedes übliche Gehäuse eines Wassermessers einfach mit einem Messer nach der Erfindung ausgestaltet werden.

Die Erfindung beschränkt sich nicht auf die vorstehend geschilderten und in den Figuren dargestellten Ausführungsformen. Es braucht z. B. der Umlaufkanal nicht kreisförmig zu sein, sondern kann z. B. eine ovale Form aufweisen. Ferner kann der Impulsgeber durch irgendein geeignetes Element gebildet werden, das der nachgeschalteten Impulsverarbeitungseinheit angepasst ist.

## Patentansprüche

1. Vorrichtung zur Verbrauchsvolumenmessung eines Fluidstroms, z. B. eines Gas- oder Wasserstroms, welche Vorrichtung im wesentlichen aus einem Gehäuse (1) mit einer Einlass- (2) und einer Auslassöffnung (3) besteht, einer im Gehäuse (1) untergebrachten, die Ein- und Auslassöffnung trennenden Wand (7), einer von dieser Wand getragenen, geschlossenen Umlaufkammer, die versehen ist mit einer parallel zur Kammerachse verlaufenden Aussenwandung und mindestens je einer Zufuhr- (5) und Abflussöffnung (6) beidseitig einer durch die Mitte der Kammer und senkrecht zur Kammerachse verlaufenden Ebene, wobei in der Kammer ein Körper (8) bewegbar untergebracht ist, und welche Vorrichtung ferner aus einem vom Körper getriebener Zähler besteht, dadurch gekennzeichnet, daß in der Kammer ein ringförmiger Umlaufkanal (4) für eine frei darin bewegliche Kugel (8) angeordnet ist, welcher Kanal (4) einen U-förmigen Querschnitt aufweist, wobei die Schenkel des U radial nach außen weisen wobei mindestens ein nahe dem Kanal angebrachtes, auf den Umlauf der Kugel (8) ansprechendes Organ zur jeweiligen Abgabe eines Impulses für den Zähler angeordnet ist und wobei die genannte Zuführöffnung (5) und die genannte Abflussöffnung (6) im Aussenbereich des Umlaufkanals (4) liegen.

2. Vorrichtung nach Anspruch 1, dadurch gekennzeichnet, daß der Körper (8) hohl ausgebildet ist.

3. Vorrichtung nach Anspruch 2, dadurch gekennzeichnet, daß die Kugel (8) mit einem Medium gefüllt ist, dessen spezifisches Gewicht von dem des Fluids abweicht.

4. Vorrichtung nach einem der vorhergehenden Ansprüche, dadurch gekennzeichnet, daß die Kammer durch einen in einem Loch der Trennwand (7) angeordneten Einsatzkörper (25) gebildet ist.

5. Vorrichtung nach Anspruch 4, dadurch gekennzeichnet, daß ein in Richtung der Kammerachse verstellbares Laufglied (27) in dem Einsatzkörper (25) angeordnet ist.

6. Vorrichtung nach Anspruch 5, dadurch gekennzeichnet daß das Glied mit einem Laufring (30) versehen ist.

7. Vorrichtung nach einem der vorhergehenden Ansprüche dadurch gekennzeichnet, daß die Zuführöffnungen (5) tangentiell gerichtet in der Außenwandung der Kammer vorgesehen sind.

8. Vorrichtung nach Anspruch 7, dadurch gekennzeichnet, daß ein Teil der Zuführöffnungen (5) oder alle eine örtliche Verengung (16) aufweisen.

9. Vorrichtung nach einem der vorhergehenden Ansprüche dadurch gekennzeichnet, daß der Kanal (4) die Form eines Kreisrings besitzt.

10. Vorrichtung nach einem der vorhergehenden Ansprüche dadurch gekennzeichnet, daß die Trennwand (7) einen Teil eines den Kanal (4) umgebenden Schneckengehäuses bildet.

11. Vorrichtung nach einem der vorhergehenden Ansprüche, dadurch gekennzeichnet, daß der Einlaßstutzen bzw. die Einlaßöffnung (2) radial gerichtet ist und ein den Strom ablenkenden Körper (20) gegenüber der Einlaßöffnung (2) im Gehäuse angebracht ist.

12. Vorrichtung nach einem der vorhergehenden Ansprüche, dadurch gekennzeichnet, daß die Abflussöffnungen (6') in der Umlaufkanalwand auf verschiedenen Teilkreisdurchmessern vorgesehen sind.

## Claims

1. Apparatus for the volumetric consumption metering of a fluid flow, for example a flow of gas or water, which apparatus essentially consists of a housing (1) with an inlet opening (2) and an outlet opening (3), of a wall (7), dividing the inlet opening and the outlet opening and accommodated in the housing (1), and of an enclosed circulation chamber, which is supported by this wall and is provided with an outside wall running parallel to the chamber axis and at least one feed opening (5) and at least one discharge opening (6) on both sides of a plane running through the middle of the chamber and perpendicularly to the chamber axis, a body (8) being movably accommodated in the chamber, and which apparatus furthermore consists of a counter driven by the body, characterized in that in the chamber there is arranged an annular circulation channel (4) for a ball (8), freely movable therein, which channel (4) has a U-shaped cross-section, the arms of the U pointing radially outwards, there being arranged at least one element fitted close to the channel and responding to the circulation of the ball (8) for the respective emission of a pulse for the counter, and the said feed opening (5) and the said discharge opening (6) lying in the outer region of the circulation channel (4).

2. Apparatus according to Claim 1, characterized in that the body (8) is made hollow.

3. Apparatus according to Claim 2, characterized in that the ball (8) is filled with a medium of a different relative density to that of the fluid.

4. Apparatus according to one of the preceding claims, characterized in that the chamber is formed by an insert body (25) arranged in a hole of the dividing wall (7).

5. Apparatus according to Claim 4, characterized in that a running member (27), adjustable in the direction of the chamber axis, is arranged in the insert body (25).

6. Apparatus according to Claim 5, characterized in that the member is provided with a race (30).

7. Apparatus according to one of the preceding claims, characterized in that the feed openings (5) are provided in a tangentially directed manner in the outside wall of the chamber.

8. Apparatus according to Claim 7, characterized in that some of the feed openings (5) or all have a local constriction (16).

9. Apparatus according to one of the preceding claims, characterized in that the channel (4) has the shape of a circular ring.

10. Apparatus according to one of the preceding claims, characterized in that the dividing wall (7) forms a part of a screw housing surrounding the channel (4).

11. Apparatus according to one of the preceding claims, characterized in that the inlet branch or the inlet opening (2) is radially directed and a body (20) deflecting the flow is fitted opposite the inlet opening (2) in the housing.

12. Apparatus according to one of the preceding claims, characterized in that the discharge openings (6') are provided in the circulation channel wall at various pitch circle diameters.

## Revendications

1. Dispositif pour la mesure d'un débit de fluide, débit de gaz ou débit d'eau par exemple, lequel dispositif est constitué pour l'essentiel d'un boîtier (1) avec une ouverture d'entrée (2) et une ouverture de sortie (3), d'une paroi (7) disposée dans le boîtier (1) et séparant les ouvertures d'entrée et de sortie, et d'une chambre de circulation fermée, portée par cette paroi, qui est munie d'une paroi extérieure s'étendant parallèlement à l'axe de la chambre et d'au moins respectivement une ouverture d'admission (5) et une ouverture d'évacuation (6) de part et d'autre d'un plan s'étendant au milieu de la chambre et perpendiculairement à l'axe de la chambre, un corps (8) étant disposé mobile dans la chambre, et lequel dispositif est constitué en outre d'un compteur entraîné par le corps, caractérisé en ce qu'est disposé dans la chambre un canal de circulation de forme annulaire (4) pour une boule (8) pouvant se déplacer librement dans ce canal, lequel canal (4) présente une section en forme de U, les branches du U étant tournées radialement vers l'extérieur, au moins un organe, monté à proximité du canal et réagissant à la circulation de la boule (8), étant prévu pour délivrer à chaque fois une impulsion destinée au compteur, et les ouvertures précitées d'admission (5) et d'évacuation (6) étant situées dans la région extérieure du canal de circulation (4).

2. Dispositif selon la revendication 1, caractérisé en ce que le corps (8) est réalisé creux.

3. Dispositif selon la revendication 2, caractérisé en ce que la boule (8) est remplie d'un milieu dont le poids spécifique est différent de celui du fluide.

4. Dispositif selon l'une quelconque des revendications précédentes, caractérisé en ce que la chambre est formée par un corps rapporté (25) disposé dans un orifice de la paroi séparatrice (7).

5. Dispositif selon la revendication 4, caractérisé en ce qu'un élément de roulement (27) déplaçable dans la direction de l'axe de la chambre est disposé dans le corps rapporté (25).

6. Dispositif selon la revendication 5, caractérisé en ce que l'élément est muni d'une bague de roulement (30).

7. Dispositif selon l'une quelconque des revendications précédentes, caractérisé en ce que les ouvertures d'admission (5) sont prévues orientées tangentiellement dans la paroi extérieure de la chambre.

8. Dispositif selon la revendication 7, caractérisé en ce qu'une partie des ouvertures d'admission (5), ou toutes, présentent un rétrécissement local (16).

9. Dispositif selon l'une quelconque des revendications précédentes, caractérisé en ce que le canal (4) présente la forme d'un anneau circulaire.

10. Dispositif selon l'une quelconque des revendications précédentes, caractérisé en ce que la paroi séparatrice (7) forme une partie d'un carter en hélice entourant le canal (4).

11. Dispositif selon l'une quelconque des revendications précédentes, caractérisé en ce que le raccord ou encore l'ouverture d'entrée (2) est orienté radialement, et en ce qu'un corps (20) déviant le flux est monté en vis-à-vis de l'ouverture d'entrée (2) dans le boîtier.

12. Dispositif selon l'une quelconque des revendications précédentes, caractérisé en ce que les ouvertures d'évacuation (6') sont prévues sur différents diamètres primitifs de référence dans la paroi du canal de circulation.

FIG.1

FIG. 2

FIG. 3

FIG.4

FIG.5

FIG.6

FIG.7

FIG.9

FIG.8

2

EP 0 091 140 B1

FIG.10

FIG.12

3

FIG.13